# EUROPEAN PATENT APPLICATION

(11) **EP 4 618 196 A1**
(43) Date of publication of application: **17.09.2025**
(21) Application number: 23889040.4
(22) Date of filing: 02.11.2023
(51) Int. Cl.: H01M 4/583, C01B 32/205, H01M 4/62, H01M 10/052, H01M 4/02

(54) **CARBON MATERIAL FOR NEGATIVE ELECTRODE ACTIVE MATERIAL, NEGATIVE ELECTRODE ACTIVE MATERIAL FOR LITHIUM SECONDARY BATTERY, AND LITHIUM SECONDARY BATTERY COMPRISING SAME**

(30) Priority: 11.11.2022 KR 20220150377
(71) Applicant: Posco Future M Co., Ltd., Pohang-si, Gyeongsangbuk-do 37918 (KR)
(72) Inventor: KO, Seunghyun, Pohang-si, Gyeongsangbuk-do 37918 (KR); JUNG, Myung Sun, Pohang-si, Gyeongsangbuk-do 37918 (KR); KIM, Jongchan, Pohang-si, Gyeongsangbuk-do 37918 (KR); CHOI, Hyun Ki, Pohang-si, Gyeongsangbuk-do 37918 (KR)
(74) Representative: Meissner Bolte Partnerschaft mbB
(86) International application number: PCT/KR2023/017377
(87) International publication number: WO 2024/101778

(57) **Abstract**

The present invention relates to a carbon material for a negative electrode active material comprising coke with an average porosity of less than 2%, a negative electrode active material using the same, and a lithium secondary battery.

## Description

### FIELD OF THE INVENTION

The present invention relates to a carbon material for a negative electrode active material, a negative electrode active material for a lithium secondary battery, and a lithium secondary battery comprising the same. More specifically, it pertains to a carbon material for a coke-based negative electrode active material, a negative electrode active material for a lithium secondary battery, and a lithium secondary battery comprising the same.

### DESCRIPTION OF THE RELATED ART

Recently, the need for high-capacity batteries has been emphasized due to the increased power consumption resulting from the enhancement of performance and integration of functions in portable electronic devices such as mobile phones and tablet PCs. Additionally, there is a significant demand for secondary batteries with excellent high-power characteristics due to the need for high-power supplies for power tools, especially for hybrid electric vehicles (HEVs) and electric vehicles (EVs).

Generally, to increase the capacity of artificial graphite materials, the graphitization heat treatment temperature is maintained at 2,800-3,000°C or higher to increase the degree of graphitization, or catalyst materials are added to induce catalytic graphitization reactions during heat treatment. To improve charge and discharge efficiency, methods such as surface coating of artificial graphite or grinding to minimize the exposure of graphite edges on particle surfaces are used to suppress the excessive formation of passivated films generated by the decomposition of electrolytes.

To enhance the performance of rapid charge and discharge, the mutual orientation of graphite particles within artificial graphite products is irregularly adjusted, or carbonaceous coatings are introduced on particle surfaces. To reduce the volume change of artificial graphite materials and electrodes due to charging and discharging, methods are used to manufacture the mutual orientation of graphite particles in an irregular form within artificial graphite products or to increase the strength of the material itself to improve dimensional stability during charge and discharge reactions.

In addition to the aforementioned examples, various technological developments are being made to improve the performance of artificial graphite as a battery material. However, there is generally a trade-off relationship between performances, where improving a specific performance may result in the reduction of another performance. For instance, reducing the size of artificial graphite particles can shorten the diffusion distance of lithium ions, thereby improving rapid charge and discharge characteristics. However, the increase in specific surface area resulting from smaller particle sizes can lead to a decrease in battery life.

### SUMMARY OF THE INVENTION

An objective of the present invention is to provide a carbon material for a negative electrode active material, a negative electrode active material for a lithium secondary battery, and a lithium secondary battery including the same, all of which exhibit excellent initial efficiency and charge-discharge characteristics.

To achieve the aforementioned objective, one embodiment of the present invention provides a carbon material for a negative electrode active material comprising a coke with an average porosity of less than 2%.

The carbon material for a negative electrode active material may have a Total Fibrosity Index (TFI) of 0.58 to 0.85.

The coke may be green coke, calcined coke, or a combination thereof.

The coke may be petroleum-based isotropic coke, petroleum-based needle coke, coal-based isotropic coke, coal-based needle coke, pitch coke, or a combination thereof.

Another embodiment of the present invention provides a negative electrode active material for a lithium secondary battery comprising artificial graphite, which is a graphitized product of coke, wherein the coke has an average porosity of less than 2%.

The coke may have a Total Fibrosity Index (TFI) of 0.58 to 0.85.

The negative electrode active material may be a single particle.

In this case, the tap density of the negative electrode active material may be 1.00 g/cc or more.

Additionally, in this case, the specific surface area of the negative electrode active material may be 2.0 m²/g or less.

The negative electrode active material may be a secondary particle assembled from a plurality of primary particles.

In this case, the tap density of the negative electrode active material may be 0.96 g/cc or more.

Additionally, in this case, the specific surface area of the negative electrode active material may be 1.85 m²/g or less.

Another embodiment of the present invention provides a method for manufacturing a negative electrode active material for a lithium secondary battery, comprising: forming a primary particle by pulverizing a carbon material comprising a coke with an average porosity of less than 2%; and graphitizing the primary particle to form artificial graphite.

The method for manufacturing a negative electrode active material may further comprise, after forming the primary particle, mixing the primary particle with a binder to form secondary particle, and the step of graphitizing the primary particle to form artificial graphite may be performed by graphitizing the secondary particle.

The carbon material may have a Total Fibrosity Index (TFI) of 0.58 to 0.85.

After forming the primary particle, the method may further comprise crushing the primary particle.

The binder may comprise petroleum pitch, coal pitch, isotropic pitch, anisotropic pitch, mesophase pitch, or a combination thereof.

In the step of forming artificial graphite, the graphitization may be performed at a temperature of 2,800°C to 3,200°C.

Another embodiment of the present invention provides a lithium secondary battery comprising the aforementioned negative electrode active material for a lithium secondary battery.

The negative electrode active material for a lithium secondary battery according to one embodiment of the present invention is derived from a coke with an average porosity of less than 2%, resulting in increased tap density and decreased specific surface area. This leads to excellent initial efficiency and charge-discharge characteristics when used in the manufacture of lithium secondary batteries.

### BRIEF DESCRIPTION OF THE DRAWINGS

FIG. 1 is a conceptual diagram illustrating a method for measuring the average porosity of coke.
FIGS. 2 and 3 are photomicrographs obtained by observing the microstructure of coke raw material 1 through a polarizing microscope.
FIGS. 4 and 5 are photomicrographs obtained by observing the microstructure of coke raw material 2 through a polarizing microscope.
FIGS. 6 and 7 are photomicrographs obtained by observing the microstructure of coke raw material 3 through a polarizing microscope.
FIGS. 8 and 9 are photomicrographs obtained by observing the microstructure of coke raw material 4 through a polarizing microscope.
FIGS. 10 and 11 are photomicrographs obtained by observing the microstructure of coke raw material 5 through a polarizing microscope.
FIGS. 12 and 13 are photomicrographs obtained by observing the microstructure of coke raw material 6 through a polarizing microscope.
FIGS. 14 and 15 are photomicrographs obtained by observing the microstructure of coke raw material 7 through a polarizing microscope.
FIGS. 16 and 17 are photomicrographs obtained by observing the microstructure of coke raw material 8 through a polarizing microscope.
FIGS. 18 and 19 are photomicrographs obtained by observing the microstructure of coke raw material 9 through a polarizing microscope.

### DETAILED DESCRIPTION OF THE EMBODIMENTS

The terms first, second, and third, etc. are used to describe various parts, components, regions, layers, and/or sections but are not limited thereto. These terms are only used to distinguish one part, component, region, layer, or section from another. Therefore, a first part, component, region, layer, or section described below may be referred to as a second part, component, region, layer, or section without departing from the scope of the present invention.

The professional terms used herein are merely for referring to specific embodiments and are not intended to limit the present invention. Singular forms used herein include plural forms unless the context clearly indicates otherwise. The term "comprising/including/containing/having" as used in the specification specifies the presence of stated features, regions, integers, steps, operations, elements, and/or components, but does not preclude the presence or addition of one or more other features, regions, integers, steps, operations, elements, components, and/or groups thereof.

When a part is referred to as being "on" or "above" another part, it can be directly on or above the other part, or intervening parts may be present. In contrast, when a part is referred to as being "directly on" another part, there are no intervening parts.

Unless otherwise defined, all terms including technical and scientific terms used herein have the same meaning as commonly understood by one of ordinary skill in the art to which this invention belongs. Commonly used dictionary definitions should be interpreted as having a meaning consistent with their meaning in the context of the relevant art and should not be interpreted in an idealized or overly formal sense unless expressly defined herein.

Unless specifically stated otherwise, % refers to weight percent, and 1 ppm is 0.0001 weight percent.

Hereinafter, embodiments of the present invention will be described in detail to enable those skilled in the art to easily practice the invention. However, the present invention can be implemented in many different forms and should not be limited to the embodiments set forth herein.

### 1. Carbon Material for Negative Electrode Active Material

An embodiment of the present invention provides a carbon material for a negative electrode active material comprising a coke with an average porosity of less than 2%. More specifically, the coke may have an average porosity of less than 2% or less than 1.5%.

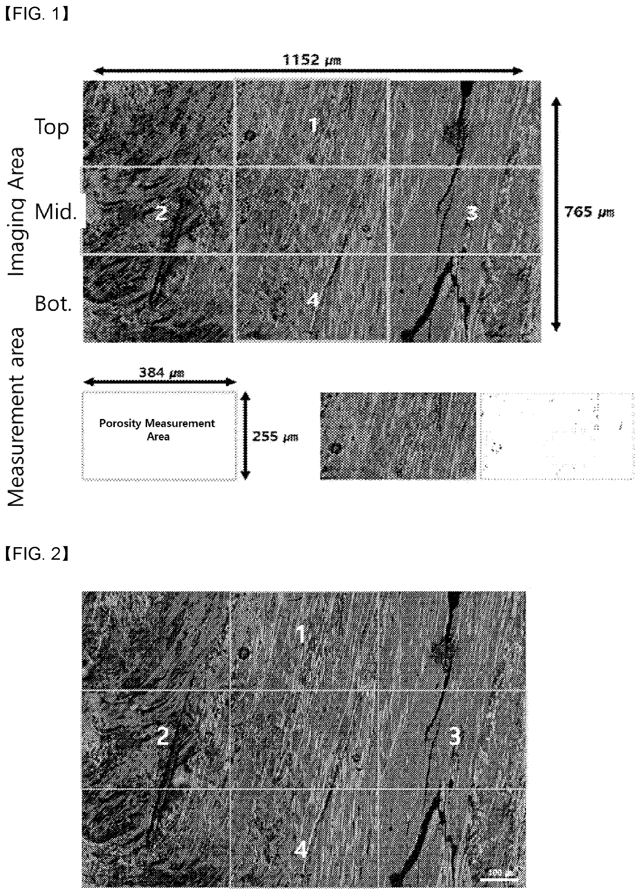

FIG. 1 is a conceptual diagram showing a method for measuring the average porosity of coke.

Referring to FIG. 1, in this specification, the average porosity (%) refers to the value obtained by measuring a target area on the carbon material with a width of 1,152 µm and a height of 765 µm, further dividing this target area into nine subdivided areas each with a width of 384 µm and a height of 255 µm, and then measuring the porosity of 1) a single area located at the center of the top, 2) two areas located at both sides of the middle, and 3) a single area located at the center of the bottom, and deriving the average value thereof. In this case, the porosity of each subdivided area refers to the percentage value derived from the sum of the pore areas present within the subdivided area relative to the total area of the subdivided area. This porosity can be measured using a polarizing microscope under the following specimen preparation and measurement conditions.

Specifically, a coke piece with dimensions of approximately 10 x 10 x 10 mm is fixed in a mold of a certain size, and then epoxy resin and a curing agent are added and hardened to create a cylindrical specimen with a diameter of 30 mm and a height of 25 mm. At this time, the size of the coke piece and the final specimen is not limited to the above values and can be freely changed. Once the specimen is confirmed to be completely hardened, it is removed from the mold, and the observation surface of the specimen is polished smoothly. The specimen is observed with a polarizing microscope at 100x magnification to obtain a structural image with dimensions of 1,152 µm x 765 µm. On the microscope, pores appear as colors close to black, while the coke structure appears as colored images such as red, blue, yellow, and brown. On such images, the total pore area is measured, and the porosity is calculated as the percentage of this value relative to the total image area.

Meanwhile, coke can be obtained through the coking reaction of coal or petroleum residues, or processed products such as pitch. At this time, the coke for the carbon material for the negative electrode active material according to the present invention may have an average porosity of less than 2%, and more specifically, less than 1.5%. When an artificial graphite negative electrode active material is produced using coke with such a low porosity, the tap density of the negative electrode active material increases, the specific surface area decreases, and when applied to a lithium secondary battery, excellent initial efficiency and charge-discharge characteristics can be realized.

More specifically, due to the high crystal orientation of the coke, particles are crushed along the grain of the crystal during the pulverization process, and the final particle shape is crushed very close to a plate shape. However, when the porosity is reduced below a certain level, the crushed particles have a shape closer to spherical rather than plate-like. As a result, the tap density of the artificial graphite increases, the crystal orientation decreases, and the battery's output performance improves. Additionally, the crystal plane of graphite can be divided into edge planes and basal planes. When the porosity decreases, the exposure of the highly reactive edge planes during pulverization is suppressed, thereby reducing the specific surface area and improving the initial efficiency of the battery.

The carbon material for a negative electrode active material may have a Total Fibrosity Index (TFI) of 0.58 to 0.85.

In this specification, the Total Fibrosity Index (TFI) is used as an optical texture quantification index and is measured as follows (see International Journal of Coal Geology 139 (2015) 184-190 and ASTM D5061-07).

A coke piece with dimensions of approximately 10 x 10 x 10 mm is fixed in a mold of a certain size, and then epoxy resin and a curing agent are added and hardened to create a cylindrical specimen with a diameter of 30 mm and a height of 25 mm. At this time, the size of the coke piece and the final specimen is not limited to the above values and can be freely changed. Once the specimen is confirmed to be completely hardened, it is removed from the mold, and the observation surface of the specimen is polished smoothly. The specimen is observed with a polarizing microscope at 500x magnification to obtain a structural image with dimensions of 1280 µm x 950 µm.

On the image, continuous areas with the same color are defined as a single domain, and the size and area of each domain are measured. The measured domain size is used to classify the texture type through the relationship of width (W) and length (L) to width (W), as shown in Table 1 below, and a fibrosity index (Wi) is assigned according to the type.

**(Table 1)**

| Microstructure Type | Domain Size | | Fibrosity Index (Wi) |
|---|---|---|---|
| | Width (W, µm) | Length (L) to Width (W) Ratio | |
| Isotropic | 0.0 | - | 0.00 |
| Incipient | 0.5 | L = W | 0.13 |
| Circular fine | 0.5-1.0 | L = W | 0.19 |
| Circular medium | 1.0-1.5 | L = W | 0.24 |
| Circular coarse | 1.5-2.0 | L < W | 0.43 |
| Lenticular fine | 1.0-3.0 | L ≥2W, L < 4W | 0.61 |
| Lenticular medium | 3.0-8.0 | L > 2W, L < 4W | 0.63 |
| Lenticular coarse | 8.0-12.0 | L > 2W, L ≤4W | 0.64 |
| Ribbon fine | 2.0-12.0 | L > 4W | 0.65 |
| Ribbon medium | 12.0-25.0 | L > 4W | 0.77 |
| Ribbon coarse | 25.0 + | L > 4W | 0.85 |

For the area, the area of the relevant domain is divided by the total area of the image to obtain the fraction (Xi). Measure and record the area fraction of all domains visible in the image. The Total Fibrosity Index (TFI) value can be calculated by multiplying the fibrosity index (Wi) and area fraction (Xi) of each domain, and summing the values of all domains, as shown in the following formula: TFI = ΣXiWi.
TFI: Total Fibrosity Index
Wi: Fibrosity index of each domain, minimum = 0, maximum = 0.85
Xi: Area fraction of each domain, ΣXi = 1

If the Total Fibrosity Index (TFI) of the carbon material for the negative electrode active material is too small, the discharge capacity and initial efficiency may decrease.

The coke may be green coke, calcined coke, or a combination thereof.

More specifically, a coke can be obtained through a coking reaction under high pressure and high temperature conditions from coal or petroleum residues, or pitch product. At this time, a coke is classified as green coke (or raw coke) and calcined coke depending on the presence or absence of post-treatment (calcination heat treatment) of the coke obtained through the coking reaction.

The coke may be petroleum-based isotropic coke, petroleum-based needle coke, coal-based isotropic coke, coal-based needle coke, pitch coke, or a combination thereof.

### 2. Negative Electrode Active Material

Another embodiment of the present invention provides a negative electrode active material for a lithium secondary battery, comprising artificial graphite, which is a graphitized product of coke, wherein the coke has an average porosity of less than 2%. The advantages of having an average porosity of less than 2% for the coke have been previously described and will not be reiterated here. More specifically, the average porosity of the coke may be less than 2% or less than 1.5%.

The coke may have a Total Fibrosity Index (TFI) of 0.58 to 0.85. The advantages of having the Total Fibrosity Index within this range have been previously described and will not be reiterated here.

The negative electrode active material may be a single particle.

More specifically, the negative electrode active material can be classified as either unassembled primary particle or secondary particle formed by the assembly and agglomeration of multiple primary particles, depending on whether the primary particles, which are unit particles, are assembled. In this case, the negative electrode active material according to the present invention may be unassembled primary particle, i.e., a single particle.

Furthermore, the tap density of the single-particle negative electrode active material may be 1.00 g/cc or more, and more specifically, it may be 1.00 g/cc or 1.05 g/cc or more, and 1.3 g/cc or 1.25 g/cc or less. **In** this specification, the tap density can be measured using a method generally employed in the industry to determine the packing degree of a sample per unit volume. For example, it may be the density (sample weight/volume) calculated after mechanically allowing a measurement container containing the sample to freely fall (tapping) a specified number of times from a certain height, as specified by ASTM B527. If the tap density of the negative electrode active material is too low, the packing density may be poor, leading to decreased electrode workability, deterioration of initial efficiency and charge output characteristics of the lithium secondary battery, and a reduction in the energy density of the electrode.

Additionally, the specific surface area of the single-particle negative electrode active material may be 2.0 m²/g or less, and more specifically, it may be 0.5 m²/g to 2.0 m²/g or 0.5 m²/g to 1.8 m²/g. In this specification, the specific surface area of the active material can be measured using the BET method (Surface area and Porosity analyzer) (Micromeritics, ASAP2020) on the active material powder. If the specific surface area of the negative electrode active material is too large, side reactions with the electrolyte may increase, leading to deterioration in capacity, initial efficiency, and lifespan characteristics of the lithium secondary battery, while a too-small specific surface area may result in reduced charge output characteristics.

Meanwhile, the average particle diameter D50 of the single-particle negative electrode active material may be 20 µm or less, and more specifically, it may be 5 to 15 µm. In this specification, the average particle diameter D50 can be defined as the particle diameter corresponding to 50% of the cumulative volume in the particle size distribution curve. The average particle diameter D50 can be measured, for example, using a laser diffraction method. The laser diffraction method can generally measure particle sizes from the submicron range to a few mm, providing results with high reproducibility and resolution. As the average particle diameter of the negative electrode active material satisfies the specified range, the initial efficiency and charge output characteristics of the lithium secondary battery may be excellent.

On the other hand, the negative electrode active material may be a secondary particle assembled from multiple primary particles. Specifically, the negative electrode active material may be an aggregate of multiple primary particles. In this case, the multiple primary particles may not be bonded by van der Waals forces but may be bonded or agglomerated by a resin binder such as pitch to form a secondary particle. As such multiple primary particles are bonded or agglomerated, voids may be formed between the primary particles, thereby further enhancing output characteristics.

In this case, the tap density of the secondary particle negative electrode active material may be 0.96 g/cc or more, and more specifically, it may be 0.96 g/cc to 1.3 g/cc, 0.98 g/cc to 1.3 g/cc, or 1.00 g/cc to 1.3 g/cc. If the tap density of the negative electrode active material is too low, the packing density may be poor, leading to decreased electrode workability, deterioration of initial efficiency and charge output characteristics of the lithium secondary battery, and a reduction in the energy density of the electrode.

Furthermore, the specific surface area of the secondary particle negative electrode active material may be 1.85 m²/g or less, and more specifically, it may be 0.5 m²/g to 1.85 m²/g or 0.5 m²/g to 1.6 m²/g. If the specific surface area of the negative electrode active material is too large, side reactions with the electrolyte may increase, leading to deterioration in capacity, initial efficiency, and lifespan characteristics of the lithium secondary battery, while a too-small specific surface area may result in reduced charge output characteristics.

Meanwhile, the average particle diameter D50 of the secondary particle negative electrode active material may be 20 µm or less, and more specifically, it may be 10 to 16 µm. As the average particle diameter of the negative electrode active material satisfies the specified range, the initial efficiency and charge output characteristics of the lithium secondary battery may be excellent.

### 3. Method for Manufacturing Negative Electrode Active Material

Another embodiment of the present invention provides a method for manufacturing a negative electrode active material, specifically a single particle negative electrode active material, for a lithium secondary battery. This method includes the steps of pulverizing a carbon material comprising coke with an average porosity of less than 2% to form primary particle; and graphitizing the primary particle to form artificial graphite.

Hereinafter, the method for manufacturing the negative electrode active material in another embodiment of the present invention will be described in detail step by step.

First, a primary particle is formed by pulverizing a carbon material comprising coke with an average porosity of less than 2%.

The advantages of including coke with an average porosity of less than 2% in the carbon material have been described above and will be omitted here. More specifically, the coke may have an average porosity of less than 2% or less than 1.5%.

The carbon material may have a Total Fibrosity Index (TFI) of 0.58 to 0.85. The advantages of the Total Fibrosity Index satisfying this range have been described above and will be omitted here.

The coke may be green coke, calcined coke, or a combination thereof.

The pulverizer for pulverizing the carbon material is not particularly limited as long as it is commonly used in the industry. For example, a jet-mill, roller mill, or a general type of continuous or batch pulverizer capable of air classification simultaneously with pulverization may be used, but it is not limited thereto.

If the sphericity of the primary particle formed by the pulverization step is insufficient, a step of crushing the primary particle may be further included. Specifically, the crushing process can enhance the sphericity of the pulverized particles, improve the packing density or the tap density, and remove fine particles through additional air classification during the process to make the particle size distribution more uniform.

The crusher for crushing the pulverized primary particles is not particularly limited as long as it is commonly used in the industry. For example, a general pulverizer or a modified pulverizer capable of improving sphericity and fine particle classification may be used, but it is not limited thereto.

If necessary, a step of carbonizing the primary particles before the graphitization step described above may be further included. This can induce pyrolysis, solidification, and conversion to carbonaceous material.

The carbonization can be performed at a temperature of 800 to 1,500°C for 1 minute to 5 hours in an inert gas atmosphere. Specifically, it can be performed in an atmosphere of nitrogen, argon, or helium gas, but it is not limited thereto.

The heating rate to the carbonization temperature can be 5 to 20°C/min. By slowly heating at this rate, structural changes can be minimized.

Next, the primary particle is graphitized to form artificial graphite.

The graphitization can be performed at a temperature of 2,800°C to 3,200°C for 1 hour to 7 days.

Although not specifically limited, an Acheson furnace may be used for the graphitization. Generally, graphitization can be performed based on the operation method of the Acheson furnace without using a separate atmosphere gas, but if an atmosphere gas is used, an inert gas can be used, and it can be performed in an atmosphere of nitrogen, helium, or argon, but it is not limited thereto.

The graphitization is not limited to the conditions described above as the heating rate, holding time at maximum temperature, and other thermal treatment conditions can vary depending on the type and characteristics of the graphitization equipment used.

If necessary, a step of pulverizing or crushing the formed artificial graphite using a pin mill or the like may be further included. This can micronize the artificial graphite.

Meanwhile, the method for manufacturing a negative electrode active material for a lithium secondary battery may include a method for manufacturing a secondary particle negative electrode active material, wherein after forming the primary particle, the method further comprises mixing the primary particles with a binder to form a secondary particle, and the step of graphitizing the primary particle to form artificial graphite is performed by graphitizing the secondary particle.

Specifically, the step of forming the secondary particle may include mixing the primary particles and the binder and forming a secondary particle through a hot kneading process utilizing shear force.

The binder may include petroleum pitch, coal pitch, isotropic pitch, anisotropic pitch, mesophase pitch, or a combination thereof. Such pitch-based materials generally have excellent wettability with the surface of the raw carbon material compared to polymer-based binders, making it easy to form a dense adhesive interface, have a high yield of carbonization or graphitization after heat treatment, and are easy and inexpensive to obtain industrially.

The softening point of the binder may be 80 to 300°C. If the softening point of the binder is too low, the binding force may be reduced, making it difficult to bond between primary particles and form secondary particles, and the carbonization yield may be low, reducing economic feasibility. If the softening point of the binder is too high, the operating temperature of the equipment for melting the binder may be too high, increasing the equipment manufacturing cost, and problems such as thermal deformation and carbonization of some samples may occur due to high-temperature use.

The content of the binder may be 2 to 20 weight% based on the total weight of the primary particles. If the binder content is too low, the binding effect may be small, and smooth secondary particle formation may not occur, and there may be problems with easy micronization during processes such as pulverization. If the binder content is too high, the content of graphite derived from the binder may increase, deteriorating the capacity and life characteristics of the battery, and the pore content generated during pyrolysis may increase, increasing the specific surface area and reducing the battery efficiency.

The mixing may be performed at a temperature above the softening point of the binder, more specifically at a temperature of 110 to 500°C.

Specifically, the mixing may be performed by placing the primary particles and the binder at room temperature into equipment capable of mixing them into a high-viscosity paste form at high temperature. At this time, the chamber can be maintained at a temperature at least 30°C higher than the softening point of the binder. This allows the binder to be sufficiently softened to have fluidity, enabling smooth and uniform mixing. If the temperature is too low, uniform mixing between the primary particles and the binder may be difficult, and if the temperature is too high, excessive heating may cause degradation (increase in softening point and pyrolysis) of the binder, resulting in a decrease in the capacity and charge-discharge characteristics exhibited by the graphite formed after completing the mixing process.

The mixing can be performed for 0.5 to 5 hours. If the mixing time is too short, uniform mixing between the primary particles and the binder may be difficult, and if the mixing time is too long, problems such as increased process costs and decreased productivity may occur, reducing product price competitiveness.

If necessary, a step of carbonizing the secondary particles before the graphitization step described above may be further included. This can remove volatiles from the binder and induce pyrolysis, solidification, and conversion to carbonaceous material.

The carbonization can be performed at a temperature of 800 to 1,500°C for 1 minute to 5 hours in an inert gas atmosphere. Specifically, it can be performed in an atmosphere of nitrogen, argon, or helium gas, but it is not limited thereto.

The heating rate to the carbonization temperature can be 5 to 20°C/min. By slowly heating at this rate, structural changes can be minimized.

Next, the secondary particles are graphitized to form artificial graphite.

The graphitization can be performed at a temperature of 2,800°C to 3,200°C for 1 hour to 7 days.

Although not specifically limited, an Acheson furnace may be used for the graphitization. Generally, graphitization can be performed based on the operation method of the Acheson furnace without using a separate atmosphere gas, but if an atmosphere gas is used, an inert gas can be used, and it can be performed in an atmosphere of nitrogen, helium, or argon, but it is not limited thereto. The graphitization is not limited to the conditions described above as the heating rate, holding time at maximum temperature, and other thermal treatment conditions can vary depending on the type and characteristics of the graphitization equipment used.

If necessary, a step of pulverizing or crushing the formed artificial graphite using a pin mill or the like may be further included. This can micronize the artificial graphite.

### 4. Lithium Secondary Battery

Another embodiment of the present invention provides a lithium secondary battery comprising the aforementioned negative electrode active material for a lithium secondary battery.

The lithium secondary battery may more specifically include a positive electrode; a negative electrode positioned opposite the positive electrode; a separator interposed between the positive electrode and the negative electrode; and an electrolyte.

Additionally, the lithium secondary battery may optionally further include a battery container housing an electrode assembly of the positive electrode, negative electrode, and separator, and a sealing member for sealing the battery container.

The negative electrode may include a negative electrode current collector; and a negative electrode active material layer disposed on the negative electrode current collector, wherein the negative electrode active material layer comprises the aforementioned negative electrode active material for a lithium secondary battery.

The negative electrode current collector is not particularly limited as long as it possesses high conductivity without causing chemical changes in the battery. Examples include copper, stainless steel, aluminum, nickel, titanium, sintered carbon, or carbon, nickel, titanium, or silver surface-treated copper or stainless steel, aluminum-cadmium alloy, and more. The negative electrode current collector typically may have a thickness of 3 to 500 µm and, similar to the positive electrode current collector, may have fine irregularities formed on its surface to enhance the binding force of the negative electrode active material. It may be used in various forms such as films, sheets, foils, nets, porous bodies, foams, non-woven fabrics, etc.

The negative electrode active material layer may optionally include a binder and/or a conductive material along with the negative electrode active material.

The binder serves to improve adhesion between the negative electrode active material particles and the adhesion between the negative electrode active material and the negative electrode current collector. Specific examples include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated EPDM, styrene-butadiene rubber (SBR), fluororubber, or various copolymers thereof, and mixtures of one or more of these may be used. The binder may be included in an amount of 1 to 30% by weight based on the total weight of the negative electrode active material layer.

The conductive material is used to impart conductivity to the electrode and can be used without particular limitation as long as it possesses electronic conductivity without causing chemical changes in the battery. Specific examples include graphite such as natural graphite or artificial graphite; carbon-based materials such as carbon black, acetylene black, ketjen black, channel black, furnace black, lamp black, thermal black, carbon fibers; metal powders or metal fibers such as copper, nickel, aluminum, silver; conductive whiskers such as zinc oxide, potassium titanate; conductive metal oxides such as titanium oxide; or conductive polymers such as polyphenylene derivatives, and mixtures of one or more of these may be used. The conductive material may be included in an amount of 1 to 30% by weight based on the total weight of the negative electrode active material layer.

The negative electrode for a lithium secondary battery according to one embodiment of the present invention can be manufactured according to a conventional method for manufacturing a negative electrode, except for using the aforementioned negative electrode active material.

Specifically, it can be manufactured by applying a composition for forming a negative electrode active material layer, which includes the aforementioned negative electrode active material and optionally a binder, conductive material, and solvent, onto the negative electrode current collector, followed by drying and rolling. The types and contents of the negative electrode active material, binder, and conductive material are as described above.

The solvent may be a solvent commonly used in the art, such as dimethyl sulfoxide (DMSO), isopropyl alcohol, N-methylpyrrolidone (NMP), acetone, or water, and mixtures of one or more of these may be used. The amount of solvent used should be sufficient to dissolve or disperse the negative electrode active material, conductive material, and binder, considering the coating thickness of the slurry and the manufacturing yield, and to have a viscosity that can exhibit excellent thickness uniformity during coating process for manufacturing an electrode.

Alternatively, the negative electrode may be manufactured by casting the composition for forming the negative electrode active material layer onto a separate support, then laminating the film obtained by peeling it off the support onto the negative electrode current collector.

The positive electrode may include a positive electrode current collector and a positive electrode active material layer disposed on the positive electrode current collector, where the positive electrode active material layer may include a positive electrode active material.

The positive electrode current collector is not particularly limited as long as it possesses conductivity without causing chemical changes in the battery. Examples include stainless steel, aluminum, nickel, titanium, sintered carbon, or surface-treated aluminum or stainless steel with carbon, nickel, titanium, silver, etc. The positive electrode current collector typically may have a thickness of 3 to 500 µm, and fine irregularities may be formed on its surface to enhance the adhesion of the positive electrode active material. It may be used in various forms such as films, sheets, foils, nets, porous bodies, foams, non-woven fabrics, etc.

The positive electrode active material layer may optionally include a binder and/or a conductive material along with the positive electrode active material.

The positive electrode active material may be a compound capable of reversibly intercalating and deintercalating lithium (lithiated intercalation compound). Specifically, one or more composite oxides of lithium and a metal selected from cobalt, manganese, nickel, and combinations thereof may be used, and specific examples include compounds represented by any one of the following chemical formulas:
LiₐA_{1-b}B_{b}D₂(wherein, 0.90 ≤ a ≤ 1.8, and 0 ≤ b ≤ 0.5); LiₐE_{1-b}B_{b}O₂-_{c}D_{c}(wherein, 0.90 ≤ a ≤ 1.8, 0 ≤ b ≤ 0.5, and 0 ≤ c ≤ 0.05); LiE_{2-b}B_{b}O_{4-c}D_{c}(wherein, 0 ≤ b ≤ 0.5, and 0 ≤ c ≤ 0.05); LiₐNi_{1-b-c}Co_{b}B_{c}D_{α}(wherein, 0.90 ≤ a ≤ 1.8, 0 ≤ b ≤ 0.5, 0 ≤ c ≤ 0.05, and 0 < α ≤ 2); LiₐNi_{1-b-c}Co_{b}B_{c}O_{2-α}T_{α}(wherein, 0.90 ≤ a ≤ 1.8, 0 ≤ b ≤ 0.5, 0 ≤ c ≤ 0.05, and 0 < α < 2); LiₐNi_{1-b-cC}o_{b}B_{c}O_{2-α}T₂(wherein, 0.90 ≤ a ≤ 1.8, 0 ≤ b ≤ 0.5, 0 ≤ c ≤ 0.05, and 0 < α < 2); LiₐNi_{1-b-c}Mn_{b}B_{c}D_{α}(wherein, 0.90 ≤ a ≤ 1.8, 0 ≤ b ≤ 0.5, 0 ≤ c ≤ 0.05, and 0 < α ≤ 2); LiₐNi_{1-b-c}Mn_{b}B_{c}O_{2-α}T_{α}(wherein, 0.90 ≤ a ≤ 1.8, 0 ≤ b ≤ 0.5, 0 ≤ c ≤ 0.05, and 0 < α < 2); LiₐNi_{1-b-c}Mn_{b}B_{c}O_{2-α}T₂(wherein, 0.90 ≤ a ≤ 1.8, 0 ≤ b ≤ 0.5, 0 ≤ c ≤ 0.05, and 0 < α < 2); LiₐNi_{b}E_{c}G_{d}O₂(wherein, 0.90 ≤ a ≤ 1.8, 0 ≤ b ≤ 0.9, 0 ≤ c ≤ 0.5, and 0.001 ≤ d ≤ 0.1); LiₐNi_{b}Co_{c}Mn_{d}GeO₂(wherein, 0.90 ≤ a ≤ 1.8, 0 ≤ b ≤ 0.9, 0 ≤ c ≤ 0.5, 0 ≤ d ≤0.5, and 0.001 ≤ e ≤ 0.1); LiₐNiG_{b}O₂(wherein, 0.90 ≤ a ≤ 1.8, and 0.001 ≤ b ≤ 0.1); LiₐCoG_{b}O₂(wherein, 0.90 ≤ a ≤ 1.8, and 0.001 ≤ b ≤ 0.1); LiₐMnG_{b}O₂(wherein, 0.90 ≤ a ≤ 1.8, and 0.001 ≤ b ≤ 0.1); LiₐMn₂G_{b}O₄(wherein, 0.90 ≤ a ≤ 1.8, and 0.001 ≤ b ≤ 0.1); QO₂; QS₂; LiQS₂; V₂O₅; LiV₂O₅; LilO₂; LiNiVO₄; Li_{(3-f)}J₂(PO₄)₃ (0 ≤ f ≤ 2); Li_{(3-f)}Fe₂(PO₄)₃ (0 ≤ f ≤ 2); and LiFePO₄.

In the chemical formulas, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; T is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; J is V, Cr, Mn, Co, Ni, Cu, or a combination thereof.

The binder serves to improve adhesion between the positive electrode active material particles and the adhesion between the positive electrode active material and the positive electrode current collector. Specific examples include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated EPDM, styrene-butadiene rubber (SBR), fluororubber, or various copolymers thereof, and mixtures of one or more of these may be used, but are not limited thereto. The binder may be included in an amount of 1 to 30% by weight based on the total weight of the positive electrode active material layer.

The conductive material is used to impart conductivity to the electrode and can be used without particular limitation as long as it possesses electronic conductivity without causing chemical changes in the battery. Specific examples include graphite such as natural graphite or artificial graphite; carbon-based materials such as carbon black, acetylene black, ketjen black, channel black, furnace black, lamp black, thermal black, carbon fibers; metal powders or metal fibers such as copper, nickel, aluminum, silver; conductive whiskers such as zinc oxide, potassium titanate; conductive metal oxides such as titanium oxide; or conductive polymers such as polyphenylene derivatives, and mixtures of one or more of these may be used, but are not limited thereto. The conductive material may be included in an amount of 1 to 30% by weight based on the total weight of the positive electrode active material layer.

The positive electrode can be manufactured according to a conventional method for manufacturing a positive electrode.

Specifically, the positive electrode can be manufactured by applying a composition for forming a positive electrode active material layer, which includes the positive electrode active material and optionally a binder, conductive material, or solvent, onto the positive electrode current collector, followed by drying and rolling it. The types and contents of the positive electrode active material, binder, and conductive material are as described above.

The solvent may be a solvent commonly used in the art, such as dimethyl sulfoxide (DMSO), isopropyl alcohol, N-methylpyrrolidone (NMP), acetone, or water, and mixtures of one or more of these may be used. The amount of solvent used should be sufficient to dissolve or disperse the positive electrode active material, conductive material, and binder, considering the coating thickness of the slurry and the manufacturing yield, and to have a viscosity that can exhibit excellent thickness uniformity during coating process for manufacturing an electrode.

Alternatively, the positive electrode may be manufactured by casting the composition for forming the positive electrode active material layer onto a separate support, then laminating the film obtained by peeling it off the support onto the positive electrode current collector.

The separator separates the positive electrode and the negative electrode and provides a pathway for lithium ions. It can be used without particular limitation as long as it is typically used as a separator in lithium secondary batteries, and it is particularly desirable to have low resistance to ion movement of the electrolyte and excellent electrolyte wettability. Specifically, a porous polymer film, such as a polyolefin-based polymer film made of an ethylene homopolymer, propylene homopolymer, ethylene/butene copolymer, ethylene/hexene copolymer, and ethylene/methacrylate copolymer, or a multilayer structure of two or more layers thereof, can be used. Additionally, conventional porous non-woven fabrics, such as non-woven fabrics made of high-melting point glass fibers, polyethylene terephthalate fibers, etc., can also be used. Furthermore, coated separators containing ceramic components or polymer materials may be used to ensure heat resistance or mechanical strength, and they may be used in single-layer or multi-layer structures.

The electrolyte may include organic liquid electrolytes, inorganic liquid electrolytes, solid polymer electrolytes, gel-type polymer electrolytes, solid inorganic electrolytes, molten inorganic electrolytes, and more, which can be used for manufacturing lithium secondary batteries, but are not limited thereto.

Specifically, the organic liquid electrolyte may include an organic solvent and a lithium salt.

The organic solvent can be used without particular limitation as long as it can serve as a medium through which ions involved in the electrochemical reaction of the battery can move. Specifically, the organic solvent may include ester-based solvents such as methyl acetate, ethyl acetate, γ-butyrolactone, ε-caprolactone; ether-based solvents such as dibutyl ether or tetrahydrofuran; ketone-based solvents such as cyclohexanone; aromatic hydrocarbon-based solvents such as benzene, fluorobenzene; carbonate-based solvents such as dimethyl carbonate (DMC), diethyl carbonate (DEC), methylethyl carbonate (MEC), ethylmethyl carbonate (EMC), ethylene carbonate (EC), propylene carbonate (PC); alcohol-based solvents such as ethanol, isopropyl alcohol; nitriles such as R-CN (where R is a C2 to C20 linear, branched, or cyclic hydrocarbon group, which may include a double-bonded aromatic or ether linkage); amides such as dimethylformamide; dioxolanes such as 1,3-dioxolane; or sulfolanes, and mixtures of one or more of these may be used. Among these, carbonate-based solvents are preferred, and a mixture of cyclic carbonates with high ionic conductivity and high dielectric constant, which can enhance the charge and discharge performance of the battery (e.g., ethylene carbonate or propylene carbonate), and linear carbonate compounds with low viscosity (e.g., ethylmethyl carbonate, dimethyl carbonate, or diethyl carbonate) is more preferred. In this case, the cyclic carbonate and chain carbonate may be mixed in a volume ratio of about 1:1 to about 1:9 to exhibit excellent performance of the electrolyte.

The lithium salt can be used without particular limitation as long as it is a compound that can provide lithium ions used in lithium secondary batteries. Specifically, the lithium salt may include LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, Lil, or LiB(C₂O₄)₂. The concentration of the lithium salt is preferably used within the range of 0.1 to 2.0M. When the concentration of the lithium salt is within the range, the electrolyte can exhibit excellent electrolyte performance with appropriate conductivity and viscosity, and lithium ions can effectively move.

In addition to the electrolyte components, the electrolyte may further include one or more additives for purposes such as improving the lifespan characteristics of the battery, suppressing battery capacity reduction, or enhancing the discharge capacity of the battery. Examples include haloalkylene carbonate compounds such as difluoroethylene carbonate, pyridine, triethyl phosphate, triethanolamine, cyclic ethers, ethylenediamine, n-glyme, hexamethylphosphoramide, nitrobenzene derivatives, sulfur, quinone imine dyes, N-substituted oxazolidinones, N,N-substituted imidazolidines, ethylene glycol dialkyl ethers, ammonium salts, pyrrole, 2-methoxyethanol, or aluminum trichloride. The additive may be included in an amount of 0.1 to 5% by weight based on the total weight of the electrolyte.

Hereinafter, embodiments of the present invention will be described in more detail through examples. However, the following examples are merely preferred embodiments of the present invention and are not intended to limit the present invention to these examples.

### [Example 1: Use of Raw Material 1, Single Particle]

### (1) Preparation of Single Particle Negative Electrode Active Material

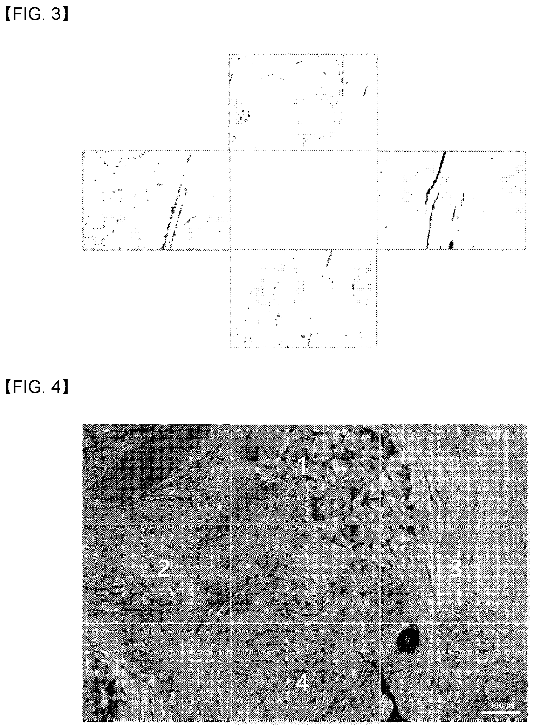

As a carbon material for the negative electrode active material, coke with an average porosity of 1.1% and a Total Fibrosity Index (TFI) of 0.84 (hereinafter referred to as "Raw Material 1") was prepared. The microstructure of the coke observed through a polarizing microscope is shown in FIG. 2 and FIG. 3.

The prepared coke was pulverized using an impact mill to achieve an average particle diameter (D50) of 8.0 to 12.0 µm.

The pulverized coke particles were subjected to shaping in a shaping mill for 5 minutes.

The shaped coke particles were loaded into an Acheson-type furnace and subjected to graphitization heat treatment at a temperature of approximately 3,000°C, followed by natural cooling to room temperature to form artificial graphite.

Herein, the term "average porosity (%)" refers to the average value obtained by measuring the porosity of specific sections on the carbon material. A measurement area of 1,152 µm width and 765 µm height is divided into nine sections of 384 µm width and 255 µm height. The porosity is measured in three sections: one central section at the top, two sections on either side of the middle, and one central section at the bottom. The average of these measurements is calculated. The porosity of each section is expressed as a percentage of the total pore area relative to the total area of the section. This porosity can be measured using a polarizing microscope under specific sample preparation and measurement conditions.

Specifically, a coke piece with dimensions of approximately 10 x 10 x 10 mm is fixed in a mold of a certain size, and epoxy resin and a hardener are added to form a cylindrical specimen with a diameter of 30 mm and a height of 25 mm. The size of the coke piece and the final specimen is not limited to these values and can be freely adjusted. Once the specimen is fully hardened, it is removed from the mold, and the observation surface is polished smoothly. The specimen is observed under a polarizing microscope at 100x magnification to obtain a structural image with dimensions of 1,152 µm x 765 µm. In the microscope image, pores appear in a color close to black, while the non-porous coke structure appears in colors like red, blue, yellow, and brown. The porosity is measured as the percentage of the total pore area relative to the total image area. FIG. 1 is a schematic illustration of the method for measuring the average porosity of the coke.

### (2) Manufacturing of Lithium Secondary Battery

### 1) Preparation of Negative Electrode

A negative electrode active material slurry was prepared by mixing 97 wt% of the negative electrode active material prepared in step (1), 2 wt% of a binder containing carboxymethyl cellulose and styrene-butadiene rubber, and 1 wt% of Super P conductive material in a distilled water solvent.

The negative electrode active material slurry was applied to a copper (Cu) current collector, dried at 100°C for 10 minutes, and then compressed in a roll press. Subsequently, vacuum drying was performed at 100°C for 12 hours to produce the negative electrode. The electrode density of the negative electrode after vacuum drying was set to 1.6 g/cc.

### 2) Manufacturing of Secondary Battery

The prepared negative electrode was used as the negative electrode, lithium metal was used as the counter electrode, and a mixture solvent with a volume ratio of 1:1 of ethylene carbonate (EC) and dimethyl carbonate (DMC) with 1 mol of LiPF₆ solution dissolved in it was used as the electrolyte.

Using each component, a half coin cell of type 2032 was manufactured according to a conventional manufacturing method.

### [Example 2: Use of Raw Material 2, Single Particle]

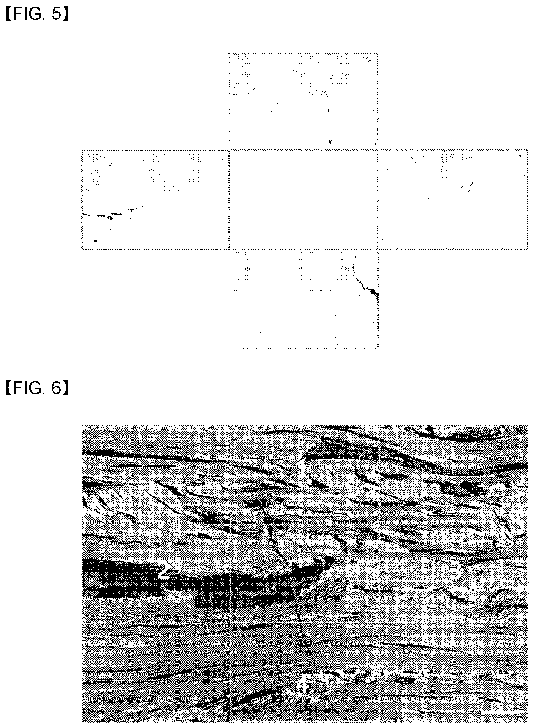

The process was conducted in the same manner as in Example 1, except that coke with an average porosity of 0.5% and a TFI of 0.58 (hereinafter referred to as "Raw Material 2") was prepared as the carbon material for the negative electrode active material. The microstructure of the coke observed through a polarizing microscope is shown in FIG. 4 and FIG. 5.

### [Comparative Example 1: Use of Raw Material 3, Single Particle]

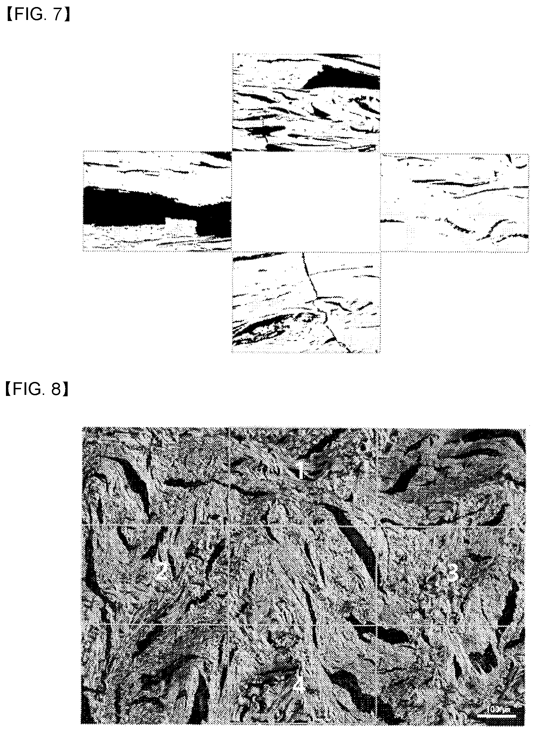

The process was conducted in the same manner as in Example 1, except that coke with an average porosity of 20.4% and a TFI of 0.81 (hereinafter referred to as "Raw Material 3") was prepared as the carbon material for the negative electrode active material. The microstructure of the coke observed through a polarizing microscope is shown in FIG. 6 and FIG. 7.

### [Comparative Example 2: Use of Raw Material 4, Single Particle]

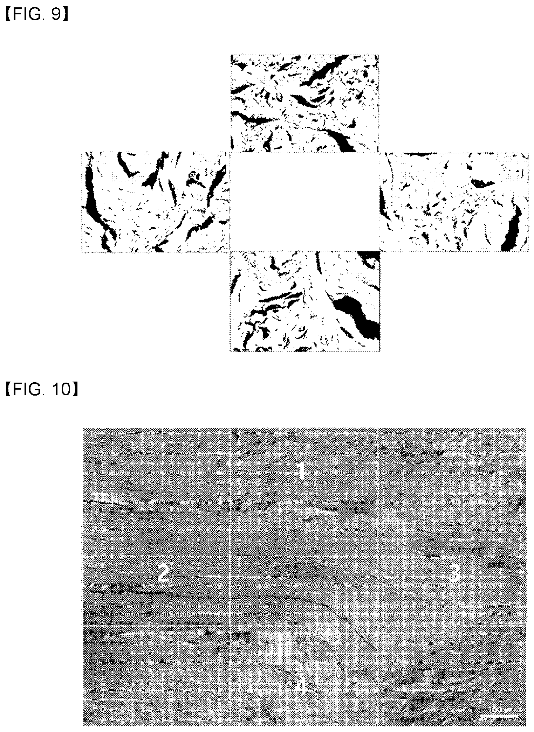

The process was conducted in the same manner as in Example 1, except that coke with an average porosity of 15.7% and a TFI of 0.62 (hereinafter referred to as "Raw Material 4") was prepared as the carbon material for the negative electrode active material. The microstructure of the coke observed through a polarizing microscope is shown in FIG. 8 and FIG. 9.

### [Example 3: Use of Raw Material 5, 13 Parts by Weight of Pitch, Secondary Particle]

### (1) Preparation of Secondary Particle Negative Electrode Active Material

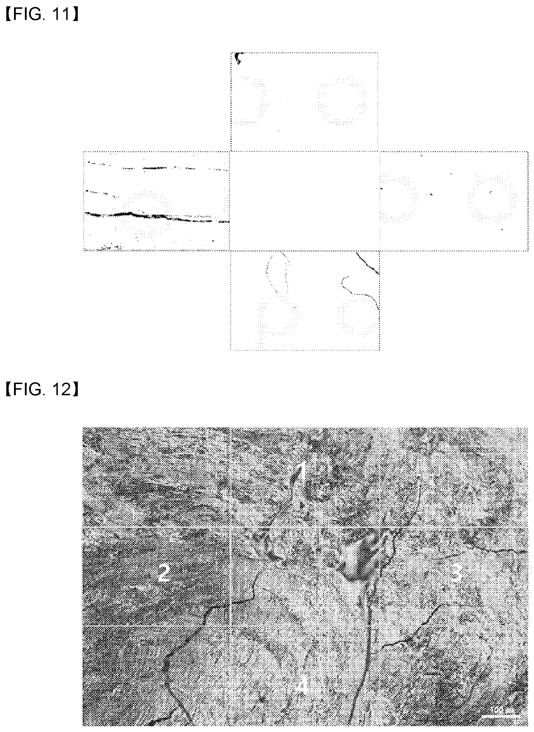

As a carbon material for the negative electrode active material, coke with an average porosity of 0.9% and a TFI of 0.79 (hereinafter referred to as "Raw Material 5") was prepared. The microstructure of the coke observed through a polarizing microscope is shown in FIG. 10 and FIG. 11.

The prepared coke was pulverized using an air classifying mill to form primary particles with an average particle diameter (D50) of 8.0 to 12.0 µm.

The primary particles were further pulverized using a pulverizer-type milling equipment with an air classifier, resulting in primary particles with an average particle diameter (D50) of 10.0 µm.

13 parts by weight of pitch with a softening point of 250°C were mixed with 100 parts by weight of the pulverized primary particles, and the mixture was stirred for 1 hour under a nitrogen atmosphere using a heatable mixing mixer to form secondary particles. Subsequently, for carbonization, the temperature was increased to 675°C at a rate of 2.6°C/min, maintained for 3 hours, and then cooled to room temperature.

The resulting material was then loaded into an Acheson-type furnace and subjected to graphitization heat treatment at a temperature of approximately 3,000°C, followed by natural cooling to room temperature, to produce the negative electrode active material. The particle diameter of the final artificial graphite negative electrode active material obtained after graphitization was 9.2 µm.

### (2) Manufacturing of Lithium Secondary Battery

### 1) Preparation of Negative Electrode

A negative electrode active material slurry was prepared by mixing 97 wt% of the manufactured negative electrode active material, 2 wt% of a binder containing carboxymethyl cellulose and styrene-butadiene rubber, and 1 wt% of Super P conductive material in a distilled water solvent.

The negative electrode active material slurry was applied to a copper (Cu) current collector, dried at 100°C for 10 minutes, and then compressed in a roll press. Subsequently, vacuum drying was performed at 100°C for 12 hours to produce the negative electrode. The electrode density of the negative electrode after vacuum drying was set to 1.6 g/cc.

### 2) Manufacturing of Secondary Battery

The prepared negative electrode was used as the negative electrode, lithium metal was used as the counter electrode, and a mixture solvent with a volume ratio of 1:1 of ethylene carbonate (EC) and dimethyl carbonate (DMC) with 1 mol of LiPF₆ solution dissolved in it was used as the electrolyte.

Using each component, a half coin cell of type 2032 was manufactured according to a conventional manufacturing method.

### [Example 4: Use of Raw Material 6, 8 Parts by Weight of Pitch, Secondary Particle]

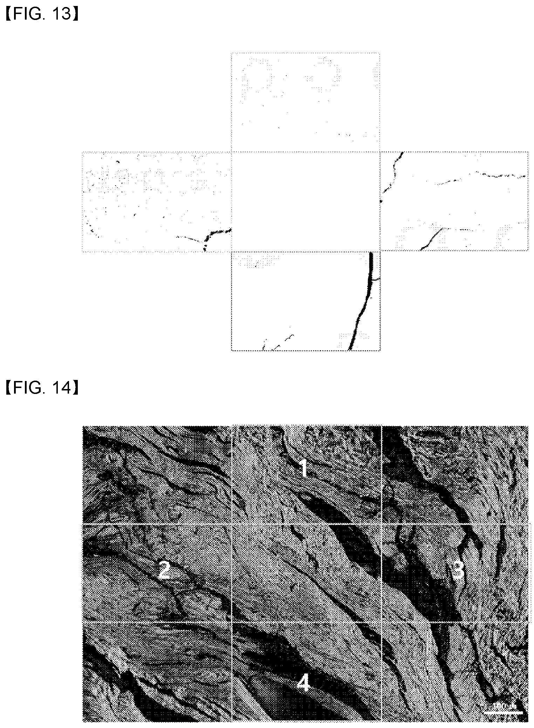

The process was conducted in the same manner as in Example 3, except that coke with an average porosity of 1.2% and a TFI of 0.81 (hereinafter referred to as "Raw Material 6") was prepared as the carbon material for the negative electrode active material, and the weight ratio of the pitch during assembly was mixed to 8%. The microstructure of the coke observed through a polarizing microscope is shown in FIG. 12 and FIG. 13.

### [Comparative Example 3: Use of Raw Material 7, 13 Parts by Weight of Pitch, Secondary Particle]

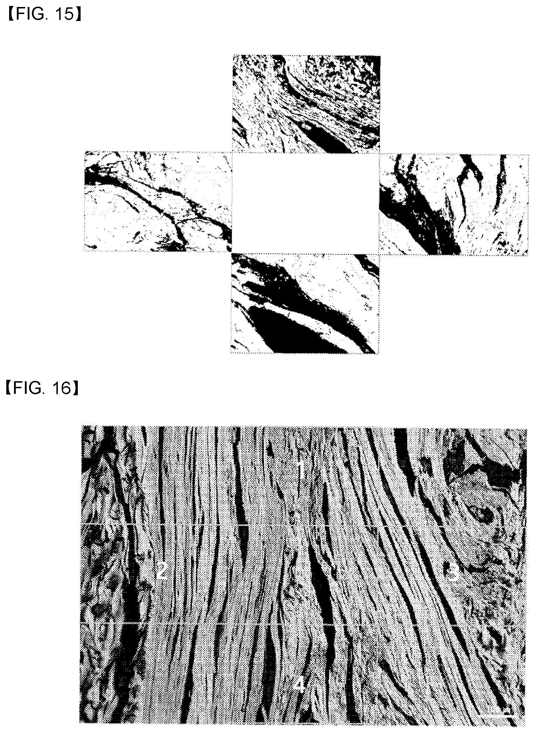

The process was conducted in the same manner as in Example 3, except that coke with an average porosity of 32.1% and a TFI of 0.75 (hereinafter referred to as "Raw Material 7") was prepared as the carbon material for the negative electrode active material. The microstructure of the coke observed through a polarizing microscope is shown in FIG. 14 and FIG. 15.

### [Comparative Example 4: Use of Raw Material 8, 8 Parts by Weight of Pitch, Secondary Particle]

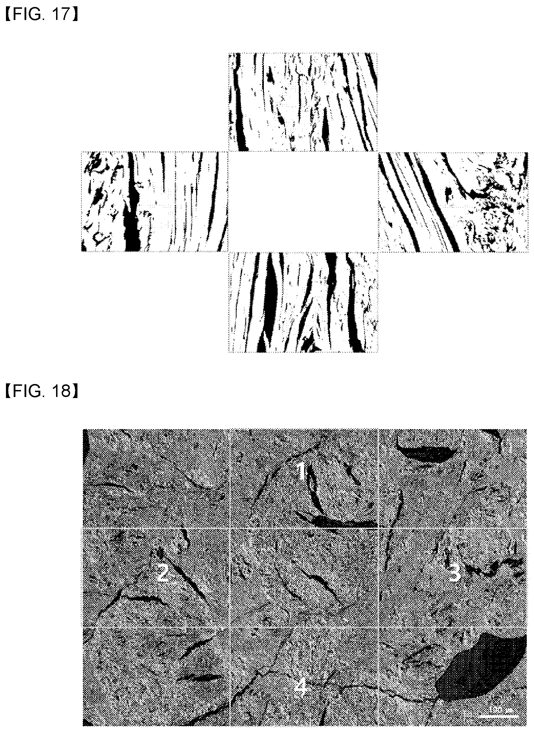

The process was conducted in the same manner as in Example 3, except that coke with an average porosity of 21.2% and a TFI of 0.85 (hereinafter referred to as "Raw Material 8") was prepared as the carbon material for the negative electrode active material, and the weight ratio of the pitch during assembly was mixed to 8%. The microstructure of the coke observed through a polarizing microscope is shown in FIG. 16 and FIG. 17.

### [Comparative Example 5: Use of Raw Material 9, Single Particle]

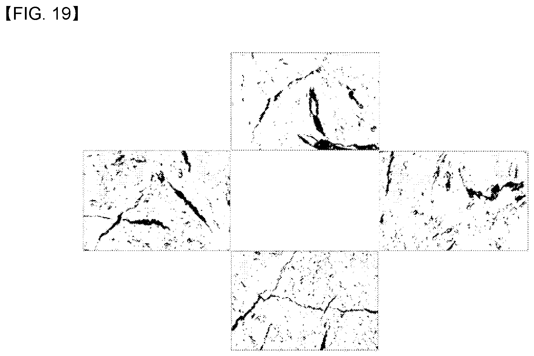

The process was conducted in the same manner as in Example 1, except that coke with an average porosity of 7.4% and a TFI of 0.38 (hereinafter referred to as "Raw Material 9") was prepared as the carbon material for the negative electrode active material. The microstructure of the coke observed through a polarizing microscope is shown in FIG. 18 and FIG. 19.

The physical properties of Raw Materials 1 to 9 used in Examples 1 to 4 and Comparative Examples 1 to 5 are summarized in Table 2 below.

**(Table 2)**

| Type | Average porosity (%) | TFI |
|---|---|---|
| Raw material 1 | 1.1 | 0.84 |
| Raw material 2 | 0.3 | 0.58 |
| Raw material 3 | 20.4 | 0.81 |
| Raw material 4 | 15.7 | 0.62 |
| Raw material 5 | 0.9 | 0.79 |
| Raw material 6 | 1.2 | 0.81 |
| Raw material 7 | 32.1 | 0.75 |
| Raw material 8 | 21.2 | 0.85 |
| Raw material 9 | 7.4 | 0.38 |

### Experimental Example 1: Evaluation of Properties of Negative Electrode Active Material

The average particle size D50, tap density, and specific surface area of the negative electrode active materials prepared according to Examples 1 to 4 and Comparative Examples 1 to 5 were measured, and the results are shown in Table 3 below. The specific measurement methods are as follows.

### (1) Measurement of Average Particle Size D50

The particle size corresponding to 50% of the cumulative volume was measured using the laser diffraction method.

### (2) Measurement of Tap Density

Based on ASTM-B527, 15g of powder was placed in a 50mL container, and the filling density was measured by tapping at 3,000 cycles @ 284 cycles/min.

### (3) Measurement of Specific Surface Area

The specific surface area was measured using the BET method (Surface area and Porosity analyzer, Micromeritics, ASAP2020).

**(Table 3)**

| Type | Shape of particle | Raw material | Average diameter (D50, µm) | Tap density (g/cc) | Specific surface area (m²/g) |
|---|---|---|---|---|---|
| Ex. 1 | Single particle | Raw material 1 | 9.2 | 1.07 | 1.72 |
| Ex.2 | Single particle | Raw material 2 | 8.5 | 1.11 | 1.21 |
| C-Ex. 1 | Single particle | Raw material 3 | 10.3 | 0.74 | 2.37 |
| C-Ex.2 | Single particle | Raw material 4 | 9.5 | 0.94 | 2.04 |
| Ex.3 | Secondary particle | Raw material 5 | 14.8 | 1.02 | 1.10 |
| Ex.4 | Secondary particle | Raw material 6 | 12.7 | 1.01 | 1.42 |
| C-Ex.3 | Secondary particle | Raw material 7 | 12.8 | 0.95 | 1.90 |
| C-Ex.4 | Secondary particle | Raw material 8 | 14.7 | 0.89 | 2.11 |
| C-Ex.5 | Single particle | Raw material 9 | 11.3 | 1.12 | 2.23 |

First, we examine the single particle negative electrode active material. Referring to Table 3, the negative electrode active materials of Examples 1 to 2, manufactured using coke with an average porosity of less than 2%, showed similar average particle diameters compared to Comparative Examples 1 to 2, but exhibited higher tap densities and smaller specific surface areas. Additionally, it was confirmed that Comparative Example 5, which does not have a region with an average porosity of less than 2%, exhibited a larger specific surface area. Next, we examine the secondary particle negative electrode active material. The negative electrode active materials of Examples 3 to 4, manufactured using coke with an average porosity of less than 2%, showed higher tap densities and smaller specific surface areas compared to Comparative Examples 3 to 4.

### Experimental Example 2: Evaluation of Electrochemical Properties of Lithium Secondary Battery

The initial discharge capacity, initial efficiency, and charge output characteristics of lithium secondary batteries manufactured according to Examples 1 to 4 and Comparative Examples 1 to 5 were evaluated, and the results are shown in Table 4 below. The specific experimental methods are as follows:

### (1) Measurement of Initial Discharge Capacity and Initial Efficiency

The initial discharge capacity and initial efficiency were measured by operating the battery under conditions of 0.1C, 5mV, 0.005C cut-off charge, and 0.1C 1.5V cut-off discharge.

### (2) Evaluation of Charge Output Characteristics

The high-speed charge characteristics were evaluated by confirming the initial discharge capacity through three cycles of charge and discharge under conditions of 0.1C, 5mV, 0.005C cut-off charge, and 0.1C, 1.5V cut-off discharge. The charge rate (C-rate) was then increased to 3.0C, and the SOC (State of Charge) percentage at the point where a plateau begins to appear on the charge curve was used as an indicator of high-speed charge. A higher value indicates a higher charge output.

**(Table 4)**

| Type | Initial discharge capacity (mAh/g) | Initial efficiency (%) | Charging output characteristic (%) |
|---|---|---|---|
| Ex. 1 | 352 | 94.3 | 11 |
| Ex.2 | 346 | 94.4 | 32 |
| C-Ex. 1 | 353 | 91.7 | 9 |
| C-Ex.2 | 345 | 87.2 | 21 |
| Ex.3 | 350 | 94.2 | 33 |
| Ex.4 | 351 | 94.8 | 33 |
| C-Ex.3 | 355 | 87.2 | 25 |
| C-Ex.4 | 353 | 94.0 | 16 |
| C-Ex.5 | 322 | 93.2 | 29 |

First, we examine the lithium secondary battery using a single particle negative electrode active material. Referring to Table 4, it was confirmed that the lithium secondary battery of Example 1 exhibits significantly superior initial efficiency and charge output characteristics compared to the lithium secondary battery of Comparative Example 1, which uses a coke-derived negative electrode active material with a similar TFI but an average porosity of 2% or more.

Additionally, it was confirmed that the lithium secondary battery of Example 2 exhibits significantly superior initial efficiency and charge output characteristics compared to the lithium secondary battery of Comparative Example 2, which uses a coke-derived negative electrode active material with a similar TFI but an average porosity of 2% or more.

Meanwhile, in Comparative Example 5, it was observed that the discharge capacity significantly decreases when the TFI is less than 0.58, regardless of the porosity. More specifically, Comparative Example 5, which uses a coke-derived negative electrode active material with a TFI of 0.38, shows a discharge capacity of 322 mAh/g, which is up to 33 mAh/g lower than that of coke with a TFI of 0.58 or more.

Next, we examine the lithium secondary battery using a secondary particle negative electrode active material.

The lithium secondary batteries of Examples 3 to 4, utilizing coke-derived negative electrode active materials with an average porosity of less than 2%, exhibited significantly superior initial efficiency and charge output characteristics compared to the lithium secondary batteries of Comparative Examples 3 to 4, which utilize coke-derived negative electrode active materials with an average porosity of 2% or more.

While the preferred embodiments of the present invention have been described above, the present invention is not limited thereto and can be variously modified and implemented within the scope of the patent claims, the detailed description of the invention, and the accompanying drawings, which are also within the scope of the present invention.

Therefore, the substantial scope of rights of the present invention shall be defined by the appended patent claims and their equivalents.

## Claims

1. A carbon material for a negative electrode active material comprising a coke with an average porosity of less than 2%.

2. The carbon material for a negative electrode active material of claim 1,
wherein the carbon material for a negative electrode active material has a Total Fibrosity Index (TFI) of 0.58 to 0.85.

3. The carbon material for a negative electrode active material of claim 1,
wherein the coke is green coke, calcined coke, or a combination thereof.

4. The carbon material for a negative electrode active material of claim 1,
wherein the coke is petroleum-based isotropic coke, petroleum-based needle coke, coal-based isotropic coke, coal-based needle coke, pitch coke, or a combination thereof.

5. A negative electrode active material for a lithium secondary battery comprising artificial graphite, which is a graphitized product of a coke, wherein the coke has an average porosity of less than 2%.

6. The negative electrode active material for a lithium secondary battery of claim 5,
wherein the coke has a Total Fibrosity Index (TFI) of 0.58 to 0.85.

7. The negative electrode active material for a lithium secondary battery of claim 5,
wherein the negative electrode active material is a single particle.

8. The negative electrode active material for a lithium secondary battery of claim 7,
wherein the tap density of the negative electrode active material is 1.00 g/cc or more.

9. The negative electrode active material for a lithium secondary battery of claim 7,
wherein the specific surface area of the negative electrode active material is 2.0 m²/g or less.

10. The negative electrode active material for a lithium secondary battery of claim 5,
wherein the negative electrode active material is a secondary particle assembled from a plurality of primary particles.

11. The negative electrode active material for a lithium secondary battery of claim 10,
wherein the tap density of the negative electrode active material is 0.96 g/cc or more.

12. The negative electrode active material for a lithium secondary battery of claim 10,
wherein the specific surface area of the negative electrode active material is 1.85 m²/g or less.

13. A method for manufacturing a negative electrode active material for a lithium secondary battery, comprising:
forming a primary particle by pulverizing a carbon material comprising coke with an average porosity of less than 2%; and
graphitizing the primary particle to form artificial graphite.

14. The method for manufacturing a negative electrode active material for a lithium secondary battery of claim 13,
wherein after forming the primary particles, the method further comprises mixing the primary particle with a binder to form secondary particles, and
the step of graphitizing the primary particle to form artificial graphite is performed by graphitizing the secondary particle.

15. The method for manufacturing a negative electrode active material for a lithium secondary battery of claim 13,
wherein the carbon material has a Total Fibrosity Index (TFI) of 0.58 to 0.85.

16. The method for manufacturing a negative electrode active material for a lithium secondary battery of claim 13,
wherein after forming the primary particle, the method further comprises crushing the primary particle.

17. The method for manufacturing a negative electrode active material for a lithium secondary battery of claim 13,
wherein the binder comprises petroleum pitch, coal pitch, isotropic pitch, anisotropic pitch, mesophase pitch, or a combination thereof.

18. The method for manufacturing a negative electrode active material for a lithium secondary battery of claim 13,
wherein in the step of forming artificial graphite, the graphitization is performed at a temperature of 2,800°C to 3,200°C.

19. A lithium secondary battery comprising the negative electrode active material for a lithium secondary battery according to claim 5.
